# EUROPEAN PATENT SPECIFICATION

(11) **EP 1 580 109 B1**
(45) Date of publication and mention of the grant of the patent: **28.11.2007**
(21) Application number: 05002534.5
(22) Date of filing: 07.02.2005
(51) Int. Cl.: B62K 19/30, B62J 39/00

(54) **Structure of attaching wheel speed sensor in motorcycle**
Befestigungsanordnung für Radgeschwindigkeitssensor in Motorrad
Structure de fixation de capteur de vitesse de roue pour motocyclette

(30) Priority: 23.03.2004 JP 2004085371
(43) Date of publication of application: 28.09.2005
(73) Proprietor: HONDA MOTOR CO., LTD., Tokyo (JP)
(72) Inventor: Toyoda, Hidetoshi K.K. Honda Gijutsu Kenkyusho, Wako-shi Saitama (JP)
(74) Representative: Rupp, Christian

(56) References cited:
- BIKE, TOWER PUBLISHING SERVICES LTD, LEICESTERSHIRE, GB, no. 367, 8 October 2003 (2003-10-08), pages 26-28, XP002372069 ISSN: 0140-4547
- PATENT ABSTRACTS OF JAPAN vol. 2002, no. 05, 3 May 2002 (2002-05-03) & JP 2002 029395 A (HONDA MOTOR CO LTD), 29 January 2002 (2002-01-29) & ES 2 192 946 A1 (HONDA GIKEN KOGYO KABUSHIKI KAISHA) 16 October 2003 (2003-10-16)
- PATENT ABSTRACTS OF JAPAN vol. 2003, no. 07, 3 July 2003 (2003-07-03) & JP 2003 065369 A (TOKICO LTD), 5 March 2003 (2003-03-05)
- PATENT ABSTRACTS OF JAPAN vol. 016, no. 519 (M-1330), 26 October 1992 (1992-10-26) & JP 04 191186 A (HONDA MOTOR CO LTD), 9 July 1992 (1992-07-09)

## Description

The present invention relates to a motorcycle in which a brake caliper of a disk brake for braking a front wheel is mounted on a mounting boss disposed at a lower portion of a front fork pivotably supporting the front wheel, with a mounting direction along a radial direction of the front wheel, and more particularly to an improvement in a structure of attaching a wheel speed sensor for detecting a speed of a front wheel.

As disclosed in Japanese Examined Utility Model Publication No. 17609/1995, for instance, a motorcycle in which a wheel speed sensor detecting a speed of a front wheel is attached to a lower portion of a front fork is already known. Further, as disclosed in Japanese Unexamined Patent Publication No. 12149/1995, there is known a disk brake of radial mount type, for a racing motorcycle for instance, in which a mounting direction of a brake caliper is set to be along a radial direction of the wheel to enhance easiness in attaching and detaching the brake caliper.

Patent document JP 2002-029395 A shows a speed sensor which is mounted in a part below a brake calliper onto a bracket which itself is attached to mounting bosses.

BIKE Magazine number 367 published by Tower Publishing Services Ltd, GB on 8 october 2003 on page 26 shows a Motorcycle with the features of the preamble of claim 1.

In the motorcycle in which the brake caliper of the disk brake of radial mount type is attached to the lower portion of the front fork, a wheel speed sensor should be disposed at a position that does not inhibit a replacement of the brake caliper. The position of the wheel speed sensor is desirably a position rational in terms of the cost and maintenance.

The present invention has been developed in view of the above-described situations, and its object is to provide a structure of attaching a wheel speed sensor in a motorcycle in which a brake caliper of a disk brake of radial mount type is attached to a lower portion of a front fork, in which the wheel speed sensor can be disposed at a position rational in terms of the cost and maintenance.

To attain the above object, an arrangement of the invention defined in claim 1 provides a structure of attaching a wheel speed sensor in a motorcycle, in which a brake caliper of a disk brake for braking a front wheel is mounted on a mounting boss disposed at a lower portion of a front fork pivotably supporting the front wheel, with a mounting direction along a radial direction of the front wheel, the structure being characterized in that a wheel speed sensor is attached to the mounting boss.

The mounting boss is formed integrally with and continuously from an axle supporting portion which is formed at a lower end of the front fork to pivotably support the front wheel.

A pair of mounting bosses, which are separated in a vertical direction, are formed at a lower portion of the front fork, and the wheel speed sensor is attached to an under surface of the lower one of the mounting bosses.

According to the arrangement of claim 1, since the wheel speed sensor is attached to the mounting boss which is disposed at the lower portion of the front fork for attachment of the disk brake of radial mount type, it is made possible to dispose the wheel speed sensor at a position enabling to prevent the wheel speed sensor from inhibiting a replacement of the brake caliper, as well as omit a boss, a stay, or the like exclusively for the wheel speed sensor, facilitating the maintenance of the disk brake and reducing the cost.

Exclusive members to which the brake caliper of the disk brake and the wheel speed sensor are attached can be omitted, thereby reducing the number of members.

The wheel speed sensor is disposed by efficiently utilizing a space below the mounting boss.
Fig. 1 is a partially cutaway side view of a front wheel of a motorcycle and its vicinity.
Fig. 2 is a cross-sectional view taken along a line 2-2 in Fig. 1.
Fig. 3 is a cross-sectional view taken along a line 3-3 in Fig 1.

There will be described a mode for carrying out the invention based on one embodiment of the invention as shown in the accompanying drawings.

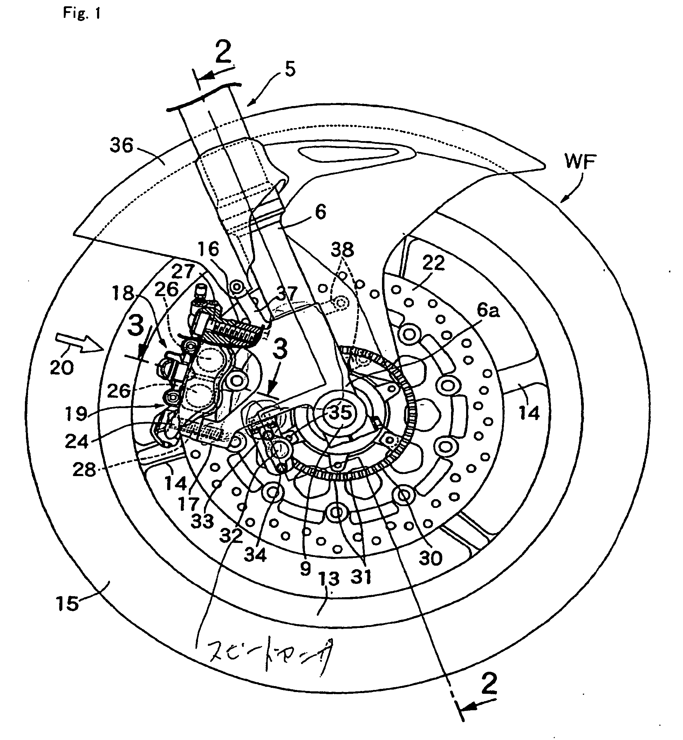

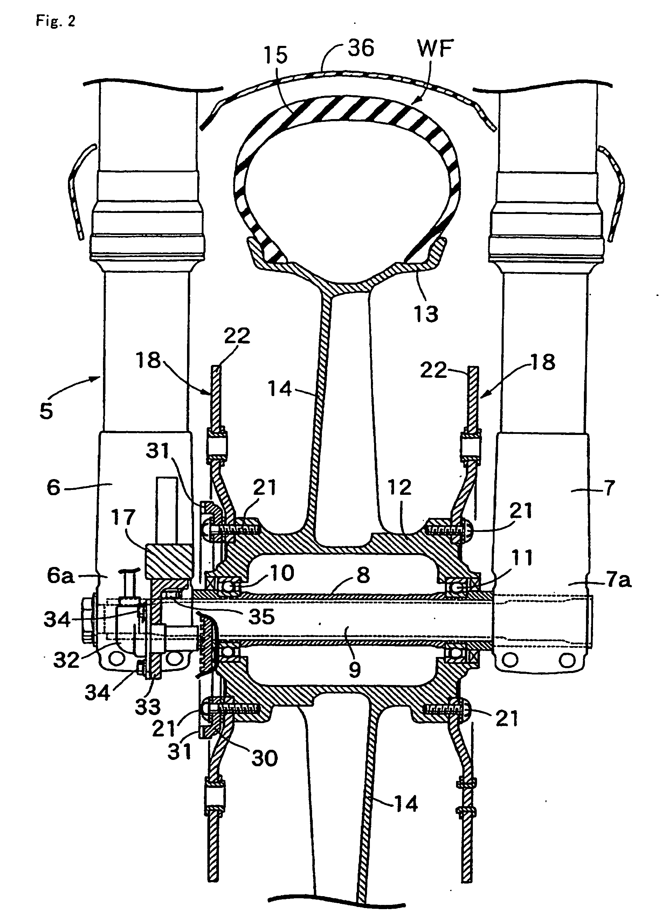

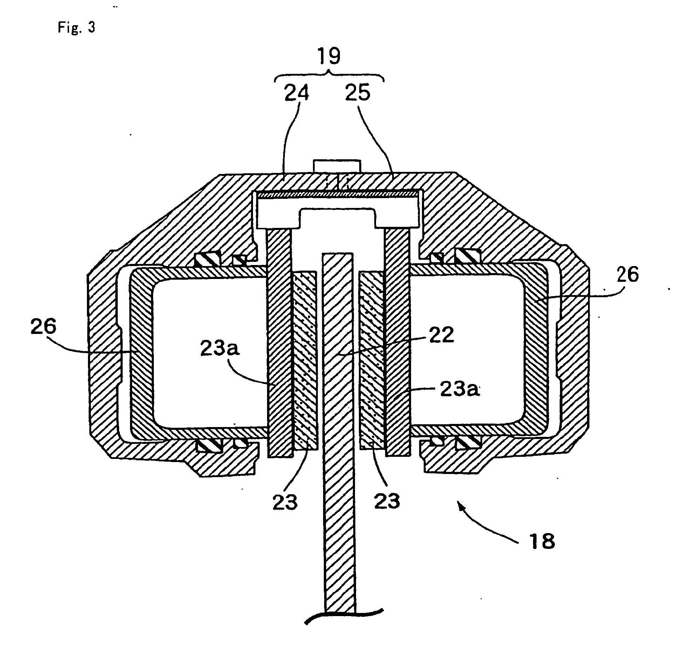

Figs. 1-3 show the embodiment of the invention. Fig. 1 is a partially cutaway side view of a front wheel of a motorcycle and its vicinity, Fig. 2 is a cross-sectional view taken along a line 2-2 in Fig. 1, and Fig. 3 is a cross-sectional view taken along a line 3-3 in Fig 1.

Referring first to Figs. 1 and 2, a front fork 5 of the motorcycle has a pair of legs 6, 7 disposed on opposite sides of a front wheel WF. Each of the legs 6, 7 has an axle supporting portion 6a, 7a at its lower end, and an axle collar 8 and an axle 9 disposed through the axle collar 8 are fixedly disposed between the axle supporting portions 6a, 7a, with an axial position of the axle collar 8 and axle 9 fixed.

The front wheel WF comprises a cylindrical hub 12 coaxially enclosing the axle collar 8 with a pair of ball bearings 10, 11 interposed between the hub 12 and the axle collar 8, and a rim 13 coaxially surrounding the hub 12, and a plurality of spokes 14 integrally connecting the hub 12 and the rim 13, and a tire 15 placed on the rim 13.

At a lower portion of each of the legs 6, 7 of the front fork 5, a pair of mounting bosses 16, 17, which are separated in a vertical direction, are formed integrally with and continuously from the axle supporting portion 6a, 7a. Respective brake calipers 19 of a pair of disk brakes 18 for braking the front wheel WF are mounted on respective pairs of the mounting bosses 16, 17, with a mounting direction 20 of each brake caliper 19 along a radial direction of the front wheel WF.

Referring also to Fig. 3, each of the disk brakes 18 comprises a brake disk 22 attached to an end of the hub 12 with a plurality of screw members 21, a pair of friction pads 23, 23 disposed on opposite sides of the brake disk 22, and the brake caliper 19 extending from one side of the disk brake 22 to the other side thereof over a circumference of the disk brake 22 to support the friction pads 23, 23. The brake caliper 19 comprises an acting portion and a reacting portion 25 that are connected to each other.

In each of the acting portion 24 and the reacting portion 25, there is slidably fitted a piston 26, so that metal backings 23a, 23a of the respective friction pads 23, 23 on the opposite sides of the brake disk 22 are pushed by the respective pistons 26 and thereby brought into frictional contact with the brake disk 22.

The disk brake 18 constructed as described above is of radial mount type, and the acting portion 24 of its brake caliper 19 is fastened to the bosses 16, 17 with a pair of mounting bolts 27, 28 each having an axis along a radial direction of the front wheel WF.

A pulser ring 30 made of a magnetic metal is held in contact with a central portion of an outer surface of the brake disk 22 of the disk brake 18 disposed on the right side of the front wheel WF. The pulser ring 30 is integrally fastened to a left side end of the hub 12 jointly with the brake disk 22, with the screw members 21, and the pulser ring 30 rotates with the front wheel WF.

A multiplicity of protrusions 31 are formed at an outer circumference of an outer side of the pulser ring 31, with an equal spacing therebetween in the circumferential direction. A wheel speed sensor 32, which is a magnetic proximity sensor for detecting a speed of the front wheel WF by detecting the protrusions 31, is fastened to a support plate 33 with bolts 34 so as to oppose to the protrusions 31 with a small distance.

The support plate 33 is substantially L-shaped and fastened with bolts 35 to the under surface of the mounting boss 17 as the lower one of the pair of mounting bosses 16, 17 formed at the right one 6 of the legs 6, 7 of the front fork 5, as disposed on the right side of the front wheel WF. That is, the wheel speed sensor 32 is disposed at the lower portion of the front fork 5 and on the right side of the front wheel WF, and attached, via the support plate 33, to the under surface of the lower one 17 of the mounting bosses 16, 17 that are disposed integrally with the lower portion of the right side of the front fork 5.

The front wheel WF is covered by a front fender 36 from its upper side. A pair of attaching plates 37, 38 each having a protruding shape are formed integrally with a lower part of each of the legs 6, 7 of the front fork 5, and the front fender 36 is fastened to the two pairs of attaching plates 37, 38.

There will be next described an operation of this embodiment. The brake calipers 19 of the disk brakes 18 for braking the front wheel WF are respectively mounted on the mounting bosses 16, 17 at the lower portions of the respective legs 6, 7 of the front fork 5 pivotably supporting the front wheel WF, which are disposed on the opposite sides of the front wheel WF, with its mounting direction 20 along a radial direction of the front wheel WF. The wheel speed sensor 32 is attached via the support plate 33 to the mounting boss 17 disposed in the leg 6 of the right side.

Since the wheel speed sensor 32 is attached to the mounting boss 17 which is disposed at the lower portion of the front fork 5 in order to mount the brake caliper 19 of the disk brake 18 of radial mount type thereon, the wheel speed sensor 32 can be disposed at a position which does not inhibit a replacement of the brake caliper 19, and which enables to omit the boss, stay or the like exclusively for the wheel speed sensor 32, facilitating the maintenance of the disk brake 18 and reducing the cost.

Since the axle supporting portions 6a, 7a are formed at the lower ends of the legs 6, 7 of the front fork 5, and the mounting bosses 16, 17 are formed integrally with and continuously from the respective axle supporting portions 6a, 7a, an exclusive member for mounting the brake caliper 19 of the disk brake 18 thereon can be omitted. Further, since the wheel speed sensor 32 is attached to the mounting boss 17 formed integrally with and continuously from the axle supporting portion 6a of the right side, an exclusive member for attaching the wheel speed sensor thereto can be omitted. Thus, the number of members can be reduced.

In addition, since the wheel speed sensor 32 is attached to the under surface of the lower one 17 of the mounting bosses 16, 17, which are formed to be separated in a vertical direction on the right one 6 of the legs 6, 7 of the front fork 5, the space below the mounting boss 17 is efficiently utilized.

Although one embodiment of the invention has been described above, the invention is not limited thereto, but may be embodied with various design changes, without departing from the invention as defined in the Scope of the Claim.

- 5: front fork
- 6a: axle supporting portion
- 16, 17: mounting boss
- 18: disk brake
- 19: brake caliper
- 20: mounting direction
- 32: wheel speed sensor
- WF: front wheel

## Claims

1. A motorcycle, in which a brake caliper (19) of a disk brake (18) for braking a front wheel (WF) is mounted on a pair of mounting bosses (16, 17) which are separated in a vertical direction and are formed at a lower portion of the front fork (5) integrally with and continuously from an axle supporting portion (6a) which pivotably supports the front wheel (WF), the brake caliper having a mounting direction (20) along a radial direction of the front wheel,
**characterized in that**
a wheel speed sensor (32) is mounted via a substantially L-shaped support plate (33) fastened with bolts (35) to an under surface of the lower one (17) of the mounting bosses (16, 17).

## Patentansprüche

1. Motorrad, wobei ein Bremssattel (19) einer Scheibenbremse (18) zum Abbremsen eines Vorderrads (WF, Front Wheel) an einem Paar Montageansätzen (16, 17) befestigt ist, die in vertikaler Richtung getrennt sind und an einem unteren Teil der Vordergabel (5) integral mit und fortlaufend aus einem Achsträger (6a) ausgebildet sind, der das Vorderrad (WF) drehbar hält, wobei der Bremssattel eine Montagerichtung (20) entlang einer radialen Richtung des Vorderrads aufweist, **dadurch gekennzeichnet, dass**
ein Radgeschwindigkeitssensor (32) mittels einer im Wesentlichen L-förmigen Trägerplatte (33) befestigt ist, die mit Bolzen (35) an der Unterseite des unteren Montageansatzes (17) der Montageansätze (16, 17) befestigt ist.

## Revendications

1. Motocyclette, dans laquelle un étrier de frein (19) d'un frein à disque (18) destiné à freiner une roue avant (WF) est monté sur une paire de bossages de montage (16, 17), qui sont séparés dans une direction verticale et qui sont formées au niveau d'une partie inférieure de la fourche avant (5) de manière intégrale avec et de manière continue à partir d'une partie de support d'essieu (6a) qui supporte de manière pivotante la roue avant (WF), l'étrier de frein ayant une direction de montage (20) le long d'une direction radiale de la roue avant,
**caractérisée en ce que**
un capteur de vitesse de roue (32) est monté via une plaque de support sensiblement en forme de L (33) fixée à l'aide de boulons (35) sur une sous-face de l'un (17) des bossages de montage inférieurs (16, 17).
